# EUROPEAN PATENT SPECIFICATION

(11) **EP 3 938 170 B1**
(45) Date of publication and mention of the grant of the patent: **29.05.2024**
(21) Application number: 20712707.7
(22) Date of filing: 11.03.2020
(51) Int. Cl.: B29C 51/00, B29C 51/08, B29C 51/14, B29C 51/16, B29C 51/30, B60R 13/08, B29K 75/00

(54) **METHOD OF THERMO-FORMING AND LAMINATION PROCESS AND LAMINATED, NON-WOVEN MOLDED ARTICLE**
VERFAHREN ZUM THERMOFORMEN UND LAMINIEREN SOWIE LAMINIERTER, NICHT GEWEBTER GEFORMTER GEGENSTAND
PROCÉDÉ DE THERMOFORMAGE ET LAMINATION ET PRODUIT MOULÉ, LAMINÉ ET NON-TISSÉ

(30) Priority: 12.03.2019 NL 2022726
(43) Date of publication of application: 19.01.2022
(73) Proprietor: DAF Trucks N.V., 5643 TW Eindhoven (NL); Autoneum Management AG, 8406 Winterthur (CH)
(72) Inventor: VAN DEN EINDEN, Antonius Johannes, 5643 TW Eindhoven (NL); MENKE, Klaus, 46397 Bocholt (DE)
(74) Representative: V.O.
(86) International application number: PCT/NL2020/050158
(87) International publication number: WO 2020/185079

(56) References cited:
- EP-A1- 0 013 468
- US-A- 3 507 730
- US-A- 4 249 983
- US-A- 4 923 547
- US-A- 5 087 311

## Description

The present invention pertains to a method of thermoforming and laminating a semi-finished nonwoven fabric in a moulding press.

In order to obtain a laminated nonwoven moulded article, commonly a semi-finished nonwoven fabric is at first thermoformed in a moulding press. In case of thermoset nonwoven-fabrics the thermoforming is performed at 190 to 220°C in a moulding press by steam. After cooling, the thereby obtained nonwoven moulded article is then removed from the moulding press. Subsequently, the nonwoven moulded article is coated with an adhesive, transferred to a lamination device, reheated to 70 to 100 °C and together with the decoration laminated. Alternatively, the adhesive can be first applied to the decoration instead of the nonwoven moulded article. In this process, two different devices are necessary to obtain the laminated nonwoven moulded article.

US 5 087 311 discloses a method of thermoforming and laminating a semi-finished non-woven fabric in a moulding press, comprising the steps of forming a semi-finished non-woven fabric in a first moulding press to obtain a non-woven moulded article, opening the first moulding press thus cooling the moulding press to ambient temperature, introducing the semi-finished moulded substrate in a second mould, subsequently applying a decoration upon the non-woven moulded article, the decoration coated with a reactive hot-melt adhesive having a melting temperature ranging from 105-134° Celsius, and closing the moulding press for 2 to 90 seconds to obtain a laminated non-woven moulded article.

Therefore, the object of the present inventors was to provide an improved process, which is less time consuming and less expensive. An advantageous process in this regard would require only one device, in which the semi-finished nonwoven fabric can be moulded and subsequently laminated.

A major problem with regard to employing the same device was that a moulding press employs rather high temperatures and pressures. If a moulding press is employed without modification in the lamination step, a high stress on the surface of the decoration is applied which leads to an uneven or even damaged surface of the decoration in the final product.

The inventors of the present invention have solved the above problem by a specifically modified method of thermoforming and laminating a semi-finished nonwoven fabric in a moulding press in which a spacer is used between the upper and the lower tools of the moulding press and whereby the surface of the decoration, which is bonded to the nonwoven moulded article, is coated with a reactive hot melt adhesive and by a moulding press comprising a spacer.

Therefore, the present invention pertains to a method of thermoforming and laminating a semi-finished nonwoven fabric in a moulding press, comprising the steps of claim 1, in particular.
i) thermoforming at a temperature ranging from 190-230° a semi-finished nonwoven fabric in a moulding press to obtain a nonwoven moulded article;
ii) opening the moulding press to thereby cooling the moulding press to a temperature ranging from 150-180°and inserting at least one spacer between the upper tool and lower tool of the moulding press;
iii) subsequently applying a decoration upon the nonwoven moulded article; the decoration (6) coated with a holt melt adhesive having a melting temperature ranging from 105-134°;
iv) closing the moulding press for 2 to 300 seconds to obtain a laminated nonwoven moulded article;
v) removing the spacer and the obtained laminated nonwoven moulded article.

The said process of the present invention, not only solves the need of reducing the number of machines used to one but also the process is shorter and less energy is needed to manufacture the same product.

In the following preferred embodiments of the present invention will be described.

The present method for thermoforming and laminating a semi-finished nonwoven fabric in a moulding press comprises the specific steps i) to v) described herein.

In step i) the temperature of thermoforming the semi-finished nonwoven fabric is preferably 190 to 230 °C. Preferably steam is employed in the thermoforming step. Furthermore, the semi-finished nonwoven fabric is preferably based on a fiber matrix of cotton, particularly recycled cotton or rice cotton and/or at least one further plant based fiber and/or at least one further glass fiber and/or at least one mineral fiber. Furthermore, the fiber matrix comprises at least one thermoplastic and/or at least one thermoset binder. The binder can be fibers, powder or liquid, preferably a powder. Particularly preferred are polymers having a low melting point or mixtures of such polymers, for example polypropylene, polyethylene terephthalate with a low melting point, phenolic resins or thermoplastic nonwoven fibers. In particular preferred is a thermoset cotton nonwoven-fabric comprising a thermoset binder in powder form.

After the thermoforming step the moulding press is opened and at least one spacer is inserted between the upper tool and lower tool, wherein the at least one spacer preferably has a thickness of 0.3 to 2 mm more preferably 0.5 to 1 mm. The spacer is preferably a distance disk. Furthermore, the spacer is preferably removable fixed to the upper tool, most preferably at the guiding rod of the upper tool. Moreover, the spacer preferably has a shape and/or preferably is positioned in a way that the spacer is not in contact with the nonwoven moulded article.

In a preferred embodiment the laminated nonwoven moulded article is a trim, in particular a trim of a driver's cabin, preferably of a truck.

Furthermore, since the spacer shall reduce the pressure which is applied to the decoration in the lamination step iv), the spacer is preferably made out of a material which is suitable to withstand or reduce the pressure applied, preferably it is made of steel, thermoset plastics, aluminum, copper or ceramic.

The insertion of the at least one spacer can preferably be carried out by a slider but is not limited to a slider and may include other means considered by the skilled person as common general knowledge i.e. placing, rotating, extending or deploying.

The slider can be moved by more than one way, but most preferably operated by the moulding machine but it would also be possible to manually move the spacer amongst other means.

After the spacer has been inserted in the next step, the decoration is applied upon the nonwoven moulded article. In a preferred embodiment the lower tool of the moulding press, which supports the moulding part, after the moulding step i), is cooled to 150 to 180 °C. The cooling can be an active or passive cooling. Preferably the cooling is a passive cooling at air. Compared to the prior art, where the second lamination device has to be heated from room temperature to a temperature of 120 to 180 °C for the lamination step, in the method according to the present invention the residual heat of the moulding step can be used which leads to a lower energy consumption.

In a further preferred embodiment the lower tool of the moulding press, which supports the nonwoven moulded article, has a temperature of 150 to 180°C, preferably 160 to 170 °C, when the decoration is applied upon the nonwoven moulded article in step iii). This ensures that the lamination of the decoration upon the nonwoven moulded article is complete within a short time.

The decoration can be for example a knitted fabric, a wrap knit fabric, needle felt, Dilours, Malifelt, but is not limited by the example and may include all decorations usual for this application.

The surface of the decoration, which is bonded with the nonwoven moulded article, is coated with a reactive hot melt adhesive. Preferably a reactive polyurethane hot melt adhesive is employed. It has been surprisingly found that the use of a reactive hot melt adhesive, preferably a reactive polyurethane hot melt adhesive, allows a firm bonding of the decoration by applying a rather low pressure and temperature in the lamination step. Additionally, the bonding happens within several seconds. Due to that an improved method is obtained, which additionally ensures an excellent surface quality of the final product.

Suitable hot melt adhesives are known in the art and are commercially available. Suitable hot melt adhesives are reactive polyurethane hot melt adhesives with a melting range of 105 °C - 134 °C and include but may include other examples:
- moisture curable polyurethane adhesives
- blocked curable polyurethane hot melt adhesive, which can be applied at temperatures of up to 130 °C as a melt and in which the reactive NCO groups are blocked, for example by a phenol-, ketoxim-, or caprolactame group. The NCO groups can subsequently be deblocked at higher temperatures, for example above 135°C and thus the adhesive can further cross-link, and
- 2-part polyurethane adhesives produced by the combination of an isocyanate with a suitable polyol.

In a preferred embodiment the reactive hot melt adhesive is a blocked curable polyurethane hot melt adhesive.

These adhesives are composed predominantly of polymeric isocyanate resins that have been constructed from the reaction of polyols with an excess of polyisocyanate monomer. Typical polyols include polyester and/or polyether polyols, where typical polyisocyanate monomers include compounds such as methylenediphenyl diisocyanate, toluene diisocyanate, or isophorone diisocyanate. Furthermore, NCO terminated polyurethane prepolymers can be employed as OH reactive monomers, which are reacted with polyester and/or polyether polyols. Suitable reactive hot melt adhesives and their preparation methods are for example disclosed in US patents US 6,133,400, US 5,932,680, US 6,221,978, US 5,018,337, and US 4,999,407, and published applications US 2007/0155859 A and US 2006/0205909 A or WO 2016/173892 A1.

The reactive hot melt adhesive preferably has a melt flow rate, which can be measured according to DIN EN ISO 1133-1:2012-03, of 8 to 10, more preferably 8.5 to 9.5, most preferably of 9.0 at 190°C.

Suitable reactive polyurethane hot melt adhesives of the present invention are adhesives which can be applied as a hot melt adhesive at rather low temperatures.

In a preferred embodiment the reactive hot melt adhesive, in particular the reactive polyurethane hot melt adhesive, has a melting range of 105 to 134 °C, preferably 120 to 130 °C, preferably measured via Differential Scanning Calorimetrie (DSC) according to DIN EN ISO 11357-3: 2013-04. When having this melting range, the hot melt adhesive can be easily fixed to the surface of the decoration. This can be done amongst other means via melt coating, dispersion coating or in the form of a powder via sputtering or scattering, preferably by employing a sputtering or scattering device. It is particularly preferred that the coating is performed in powder form of the adhesive via scattering, in particular via a scattering device, and then the coating is afterwards preferably firmly bond at 60 to 135°C, preferably via an infrared device or a conveyor furnace to the surface of the decoration (sintering). The coating can be done previous to the method of the present invention. In a preferred embodiment the coated decoration is stored for several weeks, in particularly in a coiled-up state, before used in the method of the present invention.

If a powder is used, the average particle size is preferably 200 to 500 µm, preferably determined via sieving.

Reactive hot melt adhesives can be subsequently faster cross-linked, if they are heated to a certain temperature above their melting range. Therefore, in a further preferred embodiment the fusing temperatures of the reactive hot melt adhesive, in particular the reactive polyurethane hot melt adhesive, is 135 to 180°C.

After the decoration has been applied upon the nonwoven moulded article, the moulding press is closed for 2 to 300, preferably 2 to 90, more preferably 5 to 10, seconds to obtain a laminated nonwoven molded article. In a preferred embodiment the moulding part in this step is heated to 135 to 180°C, preferably 160 to 180°C. In a further preferred embodiment the pressure in this step is 2 to 30 bar, preferably 4 to 28 bar.

After the lamination step the moulding press is opened and the at least one spacer of the moulding tool is removed. The laminated nonwoven moulded article can be removed from the tool before or after removing the spacer.

Furthermore, the present invention refers to a thermoforming and laminating device comprising a forming press with a special forming tool, characterized in that at least one spacer is removable fixed between the upper tool and the lower tool, preferably the upper tool, preferably to the column of the upper tool. In a preferred configuration, the at least one spacer has a thickness of 0.3 to 2 mm, preferably 0.5 to 1 mm, more preferably the at least one spacer is a distance disk. All the above described preferred embodiments for the spacer in the method can be applied for the at least one spacer in the device as well.

The invention is explained in more detail below by a drawing.

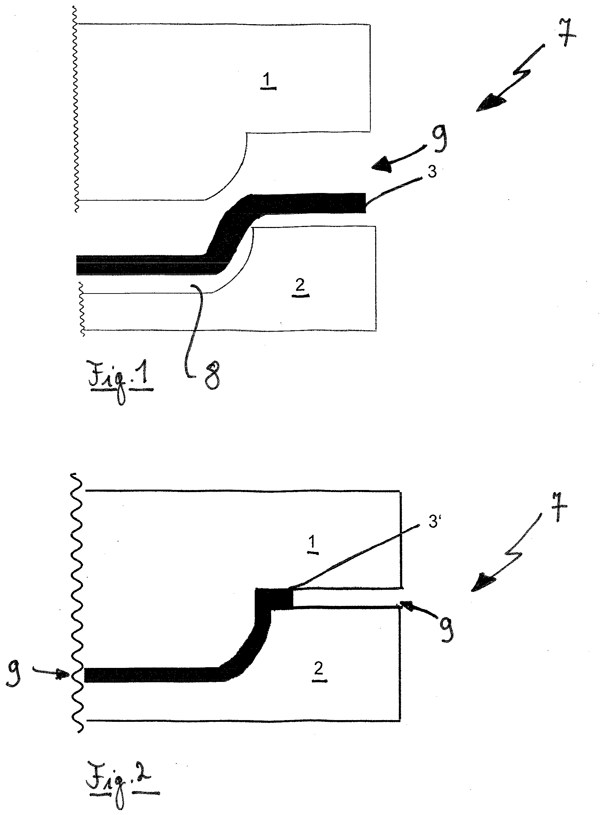

The drawing shows in the
- Figures 1-4: in a schematic side-view and cross-sectional view the positioning of an upper tool and lower tool of a thermoforming and laminating device at different times of a moulding and laminating process.

In figures 1-4 is shown the right area of thermoforming and laminating device, labeled with 7 for the whole device, respectively. The upper tool 1 and the lower tool 2 of the thermoforming and laminating device 7 are shown in figures 1-3, respectively, in a more or less distant position to each other. The wavy line indicates a mirror line. The upper tool 1 and the lower tool 2 continue as a mirror image on the other side of the wavy line. Figures 1-4 show the right end area of the thermoforming and laminating device 7 as well as of the upper tool 1 and lower tool 2. On the mirrored side, by the wavy line, the left area of the thermoforming and laminating device 7 as well as of the upper tool 1 and lower tool 2 are located.

The thermoforming and laminating device is in general designed like a common moulding device, as used in thermoforming processes of semi-finished nonwoven fabrics to obtain nonwoven moulded articles. In particular, the thermoforming and laminating device 7 or the upper tool 1 and the lower tool 2 are designed to be heatable. Connection lines and corresponding channels are present, so that steam can be introduced in the cavity 8 as well as in the remaining interspace 9, which is formed by bringing together the upper tool 1 and the lower tool 2. The upper tool 1 and the lower tool 2 are heatable in such a way that semi-finished nonwoven fabric, in particular a semi-finished nonwoven cotton fabric 3, can be heated to temperature of 180 to 250 °C. Preferably temperatures of 190 to 230 °C in the upper and lower tool 1, 2 are set, if producing thermoset nonwoven cotton textiles from semi-finished nonwoven cotton fabric 3 is desired.

Furthermore, the upper tool 1 and the lower tool 2 are equipped with hydraulic adjustment elements, which enable that the upper tool 1 and the lower tool 1 can be brought together in a way that a desired pressure is applied upon the semi-finished nonwoven fabric 3, preferably 270 to 290 bar, which is arranged in the cavity 8 and the interspace 9 and/or by the cooperation of the upper tool 1 and the cavity 8 of the lower tool 2 a shaping cavity is formed, whose shape the semi-finished nonwoven fabric 3 after carrying out the thermoforming in the thermoforming and laminating device 7 should take and form.

The thermoforming and laminating device 7 according to the present invention differs from common moulding devices in that it can perform thermoforming to obtain a shaped and hardened nonwoven moulded article or body as well as a subsequent laminating process to apply a decoration to the formed nonwoven moulded article within one device.

As shown in figure 1 in a first method step a semi-finished nonwoven fabric 3, in the exemplary embodiment a semi-finished nonwoven cotton fabric, is inserted, as usual with open, i.e., extended and spaced from each other, upper and lower tools 1, 2, on the surface of the inside of the lower tool 2 and thus into the cavity 8 and the interspace 9.

In a common and known manner the upper tool 1 and the lower tool 2 are then shut and a thermoforming process for shaping and hardening of the semi-finished nonwoven fabric 3 is performed. In the exemplary embodiment a semi-finished nonwoven cotton fabric, upon which in a preceding manufacturing step an adhesive, preferably a thermoset adhesive, on the inside between fibers or fiber bearings was applied, in particular by powdering with a thermoset adhesive in powder form, is processed to a nonwoven moulded article 3'. For this purpose the upper tool 1 and the lower tool 2 are moved into a relative position to each other as shown in figure 2 and in the exemplary embodiment heated to 190 to 230°C, respectively. Steam is introduced into the interspace 9 and the cavity 8 so that in the formed interspace 9 and the cavity 8 a thermally compression moulded nonwoven body forms a nonwoven moulded article 3'.

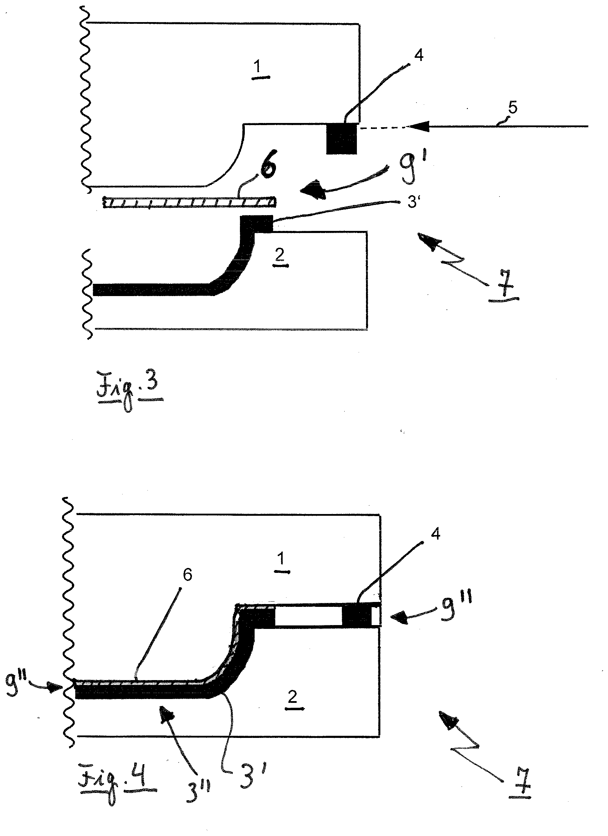

Subsequently, the thermoforming and laminating device 7 is opened and the upper tool 1 and the lower tool 2 are brought into an opened relative position to each other, as shown in figure 3. On top of the nonwoven moulded article 3', which remains in the lower tool 2, a decoration 6, shown as hatched element, is inserted into the adjusted interspace 9' between upper tool 1 and lower tool 2. Furthermore, spacer 4 are introduced and inserted via at least one slider 5 or similar means at the edge of the interspace 9' between upper tool 1 and lower tool 2. Preferably spacer disks, with a desired height, are applied on each column of the thermoforming and laminating device 7. The spacer disks have a height of 0.3 to 2 mm more preferably 0.5 to 1 mm and are chosen and applied based on the height/thickness of the decoration 6, whereby the spacer 4 can be disks and can be stacked multiple times, so that in the following lamination step or process an interspace 9" as shown in figure 4 is formed between upper tool 1 and lower tool 2, and a maximum pressure, which is defined by the height of the at least one spacer 4 is applied. The function of the at least one spacer 4 is to ensure that the upper tool 1 and the lower tool 2 are solely retractable to a distance formed by the interspace 9" in order to apply and carry out a maximum or a specifically desired pressure upon the decoration 6 and thus the laminated nonwoven moulded article 3". The at least one spacer 4 acts so to speak as "pressure limiter" when retracting the upper tool 1 and the lower tool 2 and secures that the upper tool 1 and the lower tool 2 do not move to the relative position to each other, which has interspace 9 as distance, but to a wider distance to each other forming the interspace 9".

The insertion of the decoration 6 shown in figure 3 is performed with still warm tools 1, 2 and optionally a not cooled nonwoven moulded article 3'. The whole process of opening the upper tool 1 and lower tool 2, inserting the decoration 6, inserting the one or more spacer 4 and closing the upper tool 1 and lower tool 2 to the distance, which forms the interspace 9", takes place within about 10 sec., at most 15 sec., in particular 5 to 15 sec.

After the upper tool 1 and the lower tool 2 are moved to the distance, which forms the interspace 9", as shown in figure 4, the decoration, upon which, on the side facing the nonwoven moulded article 3', a reactive polyurethane hot melt adhesive in powder form is applied, is laminated upon the nonwoven moulded article 3'. Thereby the tools 1, 2 provide and maintain in the interspace 9" the necessary activation temperature, i.e., a temperature of 150 to 180 °C, of the reactive polyurethane hot melt adhesive, whereby the lamination position, in which the lamination operation or lamination process is performed, shown in figure 4, of the upper tool 1 and the lower tool 2 to each other is maintained for 4 to 10 seconds. During this time the pressure, defined by the one or more spacer 4, is applied to the decoration 6. Thereby the interspace 9" is chosen in a way that no undesired excessive pressure is applied to the decoration. Subsequently, after the application time of 4 to 10 seconds the thermoforming and laminating device 7 is opened by moving the upper tool 1 and the lower tool 2 and the obtained laminated nonwoven moulded article 3" is retrieved as product. The adhesive used in the laminating process is designed in such a way that the pressure application time of 4 to 10 seconds at the described temperature is sufficient to activate the reactive polyurethane hot melt adhesive and sufficient bonding of the decoration 6 to the nonwoven moulded article 3' is secured.

The reactive polyurethane hot melt adhesive is scattered in powder form upon the side of the decoration 6, which later faces the surface to be bonded of the nonwoven moulded article 3', and fixated at a temperature of at most 120°C before introducing the decoration 6 into the position shown in figure 3. The maximum temperature is defined by the respective adhesive so that the activation temperature of it is not reached.

The used reactive polyurethane hot melt adhesive can be thixotropically adjusted and is able to bond the decoration 6 to the nonwoven moulded article 3' and subsequently secure it to the then obtained laminated nonwoven moulded article 3" at relatively low pressure.

After performing the lamination step or lamination process and opening of the thermoforming and laminating device 7 the one or more spacer 4 are moved via one or respectively assigned slider(s) 6 and are removed from the formed interspace 9, 9' between the upper tool 1 and the lower tool 2. Thereafter, a further thermoforming and laminating process can take place, which starts with the introduction of a semi-finished nonwoven fabric 3 and its thermoforming as shown in figure 1 and is continued with the laminating process in the same moulding and lamination device 7 according to figures 3 and 4.

Using the one or more spacer 4, which are arranged in stacked areas of the surfaces facing each other of upper tool 1 and lower tool 2, an evenly high and thick shaped interspace 9" is formed in the area between upper tool 1 and lower tool 2 of the nonwoven moulded article 3' to be laminated. Consequently, on the one hand the thermoforming and laminating device 7 forms a common moulding device, when the one or more spacer is not inserted into the device and on the other hand forms a laminating device, when the one or more spacer 4 is inserted.

Overall, the device is designed to provide temperatures of 190 - 230°C, preferably 200 - 220°C, with the heated upper tool 1 and lower tool 2 during the thermoforming. Furthermore, the thermoforming and laminating device 7 is designed to apply the required pressure for a time of 2 to 300 seconds between the upper tool 1 and the lower tool 2 to the semi-finished nonwoven fabric 3, which is inserted between the upper tool 1 and the lower tool 2, for forming the nonwoven moulded article 3'. Moreover, the thermoforming and laminating device 7 is designed to apply to the nonwoven moulded article 3' upon which the decoration 6 is positioned in the lamination step or lamination process for 2 - 15 seconds, in particular 5 -10 seconds and with a temperature of the upper tool 1 and the lower tool 2 of 100-200 °C, preferably 135-180 °C, more preferably 150-180 °C.

The height of the spacer 4 and thus of the interspace 9", which is formed between the surfaces facing each other of upper tool 1 and lower tool 2, is chosen so that in the lamination process on the nonwoven moulded article 3' upon which the decoration 6 is positioned in the moulding and lamination device 7, a pressure of 2 to 30 bar, preferably 4 to 28 bar, is applied, wherein the pressure is chosen so that the employed adhesive is sufficiently activated, cured, and forms a bond with the nonwoven moulded article 3', but the decoration 6 is pressed together as little and gently as possible.

Additionally, it is common that in the lamination process or lamination step no steam is introduced into the interspace 9", which is formed between upper tool 1 and lower tool 2.

## Claims

1. Method of thermoforming and laminating a semi-finished nonwoven fabric in a moulding press, comprising the steps of
i) thermoforming at a temperature ranging from 190-230° Celsius a semi-finished nonwoven fabric (3) in a moulding press to obtain a nonwoven moulded article (3');
ii) opening the moulding press to thereby cooling the moulding press to a temperature ranging from 150-180° Celsius and inserting at least one spacer (4) between the upper tool (1) and lower tool (2) of the moulding press;
iii) subsequently applying a decoration (6) upon the nonwoven moulded article (3'); the decoration (6) coated with a reactive holt melt adhesive having a melting temperature ranging from 105-134° Celsius;
iv) closing the moulding press for 2 to 90 seconds to obtain a laminated nonwoven moulded article (3") using residual heat;
v) removing the spacer (4) and the obtained laminated nonwoven moulded article (3").

2. Method according to claim 1, wherein the semi-finished nonwoven fabric (3) is a cotton nonwoven-fabric comprising a thermoset binder in powder form.

3. Method according to claim 1 or 2, wherein the insertion of the at least one spacer (4) is carried out by at least one slider (5).

4. Method according to any one of claims 1 to 3, wherein the at least one spacer (4) is made of steel, thermoset plastics, copper or ceramic.

5. Method according to any one of claims 1 to 4, wherein the decoration (6) is made of a knitted fabric or a warp knit fabric.

6. The method according to any one of claims 1 to 5, wherein the spacer (4) has a thickness of 0.3 to 2 mm.

7. The method according to any one of claims 1 to 6, wherein the pressure in step iv) is 4 to 28 bar.

## Patentansprüche

1. Verfahren zum Thermoformen und Laminieren eines halbfertigen Vliesstoffes in einer Formpresse, umfassend die Schritte
i) Thermoformen eines halbfertigen Vliesstoffes (3) bei einer Temperatur in dem Bereich von 190-230° Celsius in einer Formpresse, um einen Vliesformartikel (3') zu erhalten;
ii) Öffnen der Formpresse, um dadurch die Formpresse auf eine Temperatur in dem Bereich von 150-180° Celsius abzukühlen, und Einsetzen mindestens eines Abstandshalters (4) zwischen dem Oberwerkzeug (1) und dem Unterwerkzeug (2) der Formpresse;
iii) anschließendes Aufbringen einer Dekoration (6) auf den Vliesformartikel (3'), wobei die Dekoration (6) mit einem reaktiven Schmelzklebstoff mit einer Schmelztemperatur in dem Bereich von 105-134° Celsius beschichtet ist;
iv) Schließen der Formpresse für 2 bis 90 Sekunden, um einen laminierten Vliesformartikel (3") unter Verwendung von Restwärme zu erhalten;
v) Entfernen des Abstandshalters (4) und des erhaltenen laminierten Vliesformartikels (3").

2. Verfahren nach Anspruch 1, wobei der halbfertige Vliesstoff (3) ein Baumwollvliesstoff ist, der ein duroplastisches Bindemittel in Pulverform umfasst.

3. Verfahren nach Anspruch 1 oder 2, wobei das Einsetzen des mindestens einen Abstandshalters (4) durch mindestens einen Schieber (5) erfolgt.

4. Verfahren nach einem der Ansprüche 1 bis 3, wobei der mindestens eine Abstandshalter (4) aus Stahl, duroplastischem Kunststoff, Kupfer oder Keramik hergestellt ist.

5. Verfahren nach einem der Ansprüche 1 bis 4, wobei die Dekoration (6) aus einem Gewirke oder einer Kettenwirkware hergestellt ist.

6. Verfahren nach einem der Ansprüche 1 bis 5, wobei der Abstandshalter (4) eine Dicke von 0,3 bis 2 mm aufweist.

7. Verfahren nach einem der Ansprüche 1 bis 6, wobei der Druck in Schritt iv) 4 bis 28 bar beträgt.

## Revendications

1. Procédé de thermoformage et de stratification d'un tissu non tissé semi-fini dans une presse à mouler, comprenant les étapes de
i) thermoformage à une température allant de 190 à 230 ° Celsius d'un tissu non tissé semi-fini (3) dans une presse à mouler pour obtenir un article moulé non tissé (3') ;
ii) ouverture de la presse à mouler pour refroidir ainsi la presse à mouler jusqu'à une température allant de 150 à 180 ° Celsius et insertion d'au moins une entretoise (4) entre l'outil supérieur (1) et l'outil inférieur (2) de la presse à mouler ;
iii) l'application ensuite d'une décoration (6) sur l'article moulé non tissé (3') ; la décoration (6) étant enduite d'une colle thermofusible réactive ayant une température de fusion allant de 105 à 134 ° Celsius ;
iv) fermeture de la presse à mouler pendant 2 à 90 secondes pour obtenir un article moulé non tissé stratifié (3") en utilisant la chaleur résiduelle ;
v) le retrait de l'entretoise (4) et de l'article moulé non tissé stratifié (3") obtenu.

2. Procédé selon la revendication 1, dans lequel le non-tissé semi-fini (3) est un non-tissé de coton comprenant un liant thermodurcissable sous forme de poudre.

3. Procédé selon la revendication 1 ou 2, dans lequel l'insertion de l'au moins une entretoise (4) est effectuée par au moins un coulisseau (5).

4. Procédé selon l'une quelconque des revendications 1 à 3, dans lequel l'au moins une entretoise (4) est en acier, en plastique thermodurci, en cuivre ou en céramique.

5. Procédé selon l'une quelconque des revendications 1 à 4, dans lequel la décoration (6) est constituée d'un tissu tricoté ou d'un tissu tricoté en chaîne.

6. Procédé selon l'une quelconque des revendications 1 à 5, dans lequel l'entretoise (4) a une épaisseur de 0,3 à 2 mm.

7. Procédé selon l'une quelconque des revendications 1 à 6, dans lequel la pression à l'étape iv) est de 4 à 28 bar.
